# EUROPEAN PATENT APPLICATION

(11) **EP 2 657 287 A1**
(43) Date of publication of application: **30.10.2013**
(21) Application number: 11850179.0
(22) Date of filing: 15.12.2011
(51) Int. Cl.: C08L 23/14, B32B 27/32

(54) **COMPOSITION**

(30) Priority: 20.12.2010 JP 2010282767; 09.06.2011 JP 2011128919
(71) Applicant: Sumitomo Chemical Company, Limited, Tokyo 104-8260 (JP)
(72) Inventor: NAGANO, Masahi, Samutprakarn (TH); HIGO, Mutsuko, Osaka-shi Osaka 554-8558 (JP)
(74) Representative: Vossius & Partner
(86) International application number: PCT/JP2011/079752
(87) International publication number: WO 2012/086737

(57) **Abstract**

A composition comprising the following (A), (B) and (C) :
(A): Polymer (A-1) that is a polymer having structural units derived from propylene and structural units derived from 1-butene, wherein the content of the structural units derived from propylene is 70 to 99 mol% based on all structural units of Polymer (A-1), the content of the structural units derived from 1-butene is 1 to 30 mol% based on all structural units of Polymer (A-1), and substantially no melting peak is observed with Polymer (A-1), or,
Polymer (A-2) obtained by graft polymerization of Polymer (A-1) with an α,β-unsaturated carboxylic acid compound,
(B): Polymer (B-1) that is a polymer having structural units derived from ethylene and structural units derived from propylene, wherein the content of the structural units derived from ethylene is 5 to 20 mol% based on all structural units of Polymer (B-1), the content of the structural units derived from propylene is 80 to 95 mol% based on all structural units of Polymer (B-1), and the melting peak of which is observed, or,
Polymer (B-2) obtained by graft polymerization of Polymer (B-1) with an α,β-unsaturated carboxylic acid compound, and
(C): Polymer (C-1) that is a polymer having structural units derived from propylene and structural units derived from 1-butene, wherein the content of the structural units derived from propylene is 60 to 90 mol% based on all structural units of Polymer (C-1), the content of the structural units derived from 1-butene is 10 to 40 mol% based on all structural units of Polymer (C-1), and the melting peak of which is observed, or,
Polymer (C-2) obtained by graft polymerization of Polymer (C-1) with an α,β-unsaturated carboxylic acid compound.

## Description

### Technical Field

The present invention relates to a composition.

### Background Art

A compact made of by polypropylene or the like can be subjected to surface coating in order to improve a scratch resistance, or attach to a member such as a metal member. As a composition for this surface coating, a composition comprising a polymer afforded by graft polymerization of propylene-1-butene copolymer with maleic anhydride is described in JP 2009-1764-A, and a composition comprising a polymer afforded by graft polymerization of ethylene-propylene copolymer with maleic anhydride is described in JP 2009-287034-A.

### Disclosure of the Invention

The present invention provides
<1> A composition comprising the following (A), (B) and (C):
   (A): Polymer (A-1) that is a polymer having structural units derived from propylene and structural units derived from 1-butene, wherein the content of the structural units derived from propylene is 70 to 99 mol% based on all structural units of Polymer (A-1), the content of the structural units derived from 1-butene is 1 to 30 mol% based on all structural units of Polymer (A-1), and substantially no melting peak is observed with Polymer (A-1), or,
      Polymer (A-2) obtained by graft polymerization of Polymer (A-1) with an α,β-unsaturated carboxylic acid compound,
   (B): Polymer (B-1) that is a polymer having structural units derived from ethylene and structural units derived from propylene, wherein the content of the structural units derived from ethylene is 5 to 20 mol% based on all structural units of Polymer (B-1), the content of the structural units derived from propylene is 80 to 95 mol% based on all structural units of Polymer (B-1), and the melting peak of which is observed, or,
      Polymer (B-2) obtained by graft polymerization of Polymer (B-1) with an α,β-unsaturated carboxylic acid compound, and
   (C) : Polymer (C-1) that is a polymer having structural units derived from propylene and structural units derived from 1-butene, wherein the content of the structural units derived from propylene is 60 to 90 mol% based on all structural units of Polymer (C-1), the content of the structural units derived from 1-butene is 10 to 40 mol% based on all structural units of Polymer (C-1), and the melting peak of which is observed, or,
      Polymer (C-2) obtained by graft polymerization of Polymer (C-1) with an α,β-unsaturated carboxylic acid compound;
<2> The composition according to <1> wherein the composition comprises 10 to 90 parts by weight of (A), 1 to 50 parts by weight of (B) and 1 to 89 parts by weight of (C) with respect to 100 parts by weight of the composition;
<3> The composition according to <1> or <2> wherein the limiting viscosity of Polymer (A-1) is 0.1 to 10 dl/g;
<4> The composition according to any one of <1> to <3>, further comprising an organic solvent;
<5> The composition according to any one of <1> to 3>, further comprising water and an emulsifier;
<6> A laminate comprising;
   an adhesive layer derived from the composition according to any one of <1> to <5> and
   an adherend;
<7> The laminate according to <6>, wherein the adherend is an adherend which is made of a plastic material;
<8> The laminate according to <7>, wherein the plastic material is polyolefin; and
<9> A method for manufacturing a laminate comprising;
   a first step in which the composition according to any one of <1> to <5> is applied onto an adherend to give a laminate comprising the adherend and a layer containing the composition, and,
   a second step in which the laminate obtained in the first step is dried to give a laminate comprising the adherend and a layer derived from the composition.

### Best Modes for Carrying Out the Invention

A composition of the present invention is a composition comprising the following (A), (B) and (C):
(A) : Polymer (A-1) that is a polymer having structural units derived from propylene and structural units derived from 1-butene, wherein the content of the structural units derived from propylene is 70 to 99 mol% based on all structural units of Polymer (A-1), the content of the structural units derived from 1-butene is 1 to 30 mol% based on all structural units of Polymer (A-1), and substantially no melting peak is observed with Polymer (A-1), or,
   Polymer (A-2) obtained by graft polymerization of Polymer (A-1) with an α,β-unsaturated carboxylic acid compound,
(B): Polymer (B-1) that is a polymer having structural units derived from ethylene and structural units derived from propylene, wherein the content of the structural units derived from ethylene is 5 to 20 mol% based on all structural units of Polymer (B-1), the content of the structural units derived from propylene is 80 to 95 mol% based on all structural units of Polymer (B-1), and the melting peak of which is observed, or,
   Polymer (B-2) obtained by graft polymerization of Polymer (B-1) with an α,β-unsaturated carboxylic acid compound, and
(C): Polymer (C-1) that is a polymer having structural units derived from propylene and structural units derived from 1-butene, wherein the content of the structural units derived from propylene is 60 to 90 mol% based on all structural units of Polymer (C-1), the content of the structural units derived from 1-butene is 10 to 40 mol% based on all structural units of Polymer (C-1), and the melting peak of which is observed, or,
   Polymer (C-2) obtained by graft polymerization of Polymer (C-1) with an α,β-unsaturated carboxylic acid compound.
   Polymer (A-1) and Polymer (A-2) are sometimes collectively referred to as "Polymer (A)", and Polymer (B-1) and Polymer (B-2) are sometimes collectively referred to as "Polymer (B)",

### <Polymer (A-1)>

Polymer (A-1) is a polymer having structural units derived from propylene and structural units derived from 1-butene, wherein the content of the structural units derived from propylene is 70 to 99 mol% based on all structural units of Polymer (A-1), the content of the structural units derived from 1-butene is 1 to 30 mol% based on all structural units of Polymer (A-1), and substantially no melting peak is observed with Polymer (A-1).

The content of the structural units derived from propylene is preferably 71 to 99 mol%, more preferably 80 to 99 mol%, still more preferably 90 to 99 mol% and particularly preferably 95 to 99 mol% based on all structural units of Polymer (A-1).

The content of the structural units derived from 1-butene is preferably 1 to 29 mol%, more preferably 1 to 20 mol%, still more preferably 1 to 10 mol% and particularly preferably 1 to 5 mol% based on all structural units of Polymer (A-1).

Polymer (A-1) is a polymer of which substantially no melting peak is observed by differential scanning calorimetry (DSC).

In the present description, "melting peak is substantially not observed" means that within the range of temperature from -100°C to 200°C, no crystalline melting peak that has a heat quantity of crystal melting of 1 J/g or more is observed.

Preferably, within the range of temperature from -100°C to 200°C, neither crystalline melting peak that has a heat quantity of crystal melting of 1 J/g or more nor crystallization peak that has a heat quantity of crystallization of 1 J/g or more is observed.

The limiting viscosity of Polymer (A-1) is preferably 0.1 dl/g or more, more preferably 0.3 dl/g or more, still more preferably 0.5 dl/g or more and particularly preferably 0.7 dl/g or more from the viewpoint of increasing tensile strength and scratch resistance of the composition of the present invention. Moreover, the limiting viscosity is preferably 10 dl/g or less, more preferably 7 dl/g or less, still more preferably 5 dl/g or less and particularly preferably 4 dl/g or less from the viewpoint of increasing workability during the molding process of the composition of the present invention. The limiting viscosity is measured in tetralin at 135°C using an Ubbelohde viscometer.

The molecular weight distribution (M_{w}/Mₙ) of Polymer (A-1) is preferably 1 to 4, and more preferably 1 to 3 from the viewpoint of reducing the stickiness of the composition of the present invention. The molecular weight distribution is measured with gel permeation chromatography (GPC).

In addition to the structural unit derived from propylene and the structural unit derived from 1-butene, Polymer (A-1) may contain the other structural unit different from them.

Examples of the other structural unit include structural units derived from ethylene, a C₃-C₂₀ straight-chain α-olefin (excluding propylene and 1-butene), a cyclic olefin, a vinyl aromatic compound, and a polyene compound. Specifically the structural units described in JP 2008-63557-A are noted.

While Polymer (A-1) can be produced using the known Ziegler-Natta catalysts or the known single-site catalyst (metallocenes, and the like), use of the known single-site catalyst (metallocenes, and the like) in the production is preferable from the viewpoint of improving the heat resistance of the composition of the present invention. Examples of single-site catalysts include the metallocene catalyst described in JP S58-19309-A, JP S60-35005-A, JP S60-35006-A, JP S60-35007-A, JP S60-35008-A, JP S61-130314-A, JP H3-163088-A, JP H4-268307-A, JP H9-12790-A, JP H9-87313-A, JP H11-80233-A and JP H 10-508055-A, and the non-metallocene complex catalyst described in JP H10-316710-A, JP H 11-100394-A, JP H 11-80228-A, JP H 11-80227-A, JP H10-513489-A, JP H 10-338706-A and JP H11-71420-A. Among them, from the viewpoint of being readily available, preferable is the metallocene catalyst, and more preferable is a complex of a transition metal of Groups 3 to 12 of the Periodic Table with a C1-antipode structure that has at least one cyclopentadienyl type anion skeleton. Examples of a method for producing a polymer using a metallocene catalyst include the method in the specification of EP 1211287-A.

### <Polymer (A-2)>

Polymer (A-2) is a polymer which can be obtained by graft polymerization of Polymer (A-1) with an α,β-unsaturated carboxylic acid compound. Polymer (A-2) is a polymer of which substantially no melting peak is observed by differential scanning calorimetry (DSC).

The amount of the graft polymerization with the α,β-unsaturated carboxylic acid compound is usually 0.1 to 10 wt%, preferably 0.2 to 5 wt%, and more preferably 0.2 to 4 wt% based on 100 wt% of Polymer (A-2) obtained.

When the amount of the graft polymerization with the α,β-unsaturated carboxylic acid compound is 0.1 wt% or more, Polymer (A-2) obtained is easy to handle, and when it is 10 wt% or less, the adhesive strength of the composition obtained tends to be increased.

Examples of the α,β-unsaturated carboxylic acid compound include an α,β-unsaturated carboxylic acid such as maleic acid, itaconic acid and citraconic acid, an α,β-unsaturated carboxylate ester such as maleate methyl, itaconic acid methyl and citraconic acid methyl, an α,β-unsaturated carboxylic acid anhydride such as maleic anhydride, anhydrous itaconic acid and anhydrous citraconic acid. These α,β-unsaturated carboxylic acid compounds may be used in combination.

Among them, preferably is the α,β-unsaturated carboxylic acid anhydride, and more preferably is maleic anhydride.

Examples of methods for producing Polymer (A-2) include a graft polymerization method wherein Polymer (A-1) is melted, and thereafter the α,β-unsaturated carboxylic acid compound is added thereto, and a graft polymerization method wherein Polymer (A-1) is dissolved in a solvent such as toluene and xylene, and thereafter the α,β-unsaturated carboxylic acid compound is added thereto.

The graft polymerization method wherein Polymer (A-1) is melted, and thereafter the α,β-unsaturated carboxylic acid compound is added thereto is preferred in the viewpoint that by the melt-kneading using an extruder, various known methods for combining resins, or a resin with the additives of a solid or liquid can be adopted. As a furthermore preferable example is a method wherein a homogenous mixture is obtained by mixing all of each of the components or each of the components combined separately using a Henschel mixer, ribbon blender, blender, or the like, after that, the mixture obtained is melt-kneaded. As a melt-kneading means, a conventionally known melt-kneading means such as a Banbury mixer, plast mill, Brabender plastograph, and single-screw or twin-screw extruder can be widely adopted. From the viewpoint of the possibility of continuous production of Polymer (A-2) and increased productivity, preferable is a method wherein kneading is carried out by supplying Polymer (A-1), the α,β-unsaturated carboxylic acid compound and the radical initiator which are thoroughly pre-mixed in advance from the supply port of the extruder using a single-screw or dual-screw extruder.

Additionally, the graft polymerization method wherein Polymer (A-1) is dissolved in a solvent such as toluene and xylene, and thereafter the α,β-unsaturated carboxylic acid compound is added thereto include a method wherein Polymer (A-1), the α,β-unsaturated carboxylic acid compound and a radical initiator are added to the solvent, either according to a suitably arbitrarily chosen sequence or simultaneously, to dissolve or suspend Polymer (A-1) in the solvent, whereby graft polymerizing with the α,β-unsaturated carboxylic acid compound under conventional heating.

The used amount of the solvent may be the amount that is capable of dissolving or suspending Polymer (A-1). The used amount of the solvent is usually 0.5 to 50 parts by weight, preferably approximately 1 to 30 parts by weight, and depending on the case can be approximately 1 to 10 parts by weight based on 1 part by weight of Polymer (A-1).

The added amount of the radical initiator is usually 0.1 to 10 parts by weight, preferably 0.2 to 5 parts by weight based on 100 parts by weight of Polymer (A-1). When the added amount is 0.1 parts by weight or less, the amount of the graft polymerization of Polymer (A-1) is reduced, and the polymer of which has a viscosity is too high is observer and tends to be hard to handle, when the added amount is 10 parts by weight or less, the amount of the unreacted radical initiator in the polymer obtained is reduced, and the adhesive strength of the composition obtained tends to increase.

The radical initiator is usually an organic peroxide compound, preferably an organic peroxide compound having a decomposition temperature of 110 to 160°C to be a half-life of 1 hour. Use of the organic peroxide compound of which decomposition temperature is 110°C or above tends to increase the amount of the graft polymerization with α,β-unsaturated carboxylic acid compound, and use of the organic peroxide compound of which decomposition temperature is 160°C or below tends to decrease degradation of Polymer (A-1). In addition, these organic peroxide compounds having functions of abstracting a proton from Polymer (A-1) after decomposing and generating radicals are preferable.

Examples of the organic peroxide compound having a decomposition temperature of 110 to 160°C to be a half-life of 1 hour include a diacylperoxide compound, a dialkylperoxide compound, a peroxyketal compound, an alkylperester compound and a percarbonate compound. Examples thereof include dicetyl peroxydicarbonate, di-3-methoxybutyl peroxydicarbonate, di-2-ethylhexyl peroxydicarbonate, bis(4-tert-butylcyclohexyl) peroxydicarbonate, diisopropyl peroxydicarbonate, tert-butyl peroxyl isopropylcarbonate, dimyristyl peroxycarbonate, 1,1,3,3-tetramethyl butyl neodecanoate, α-cumyl peroxyneodecanoate, tert-butyl peroxyneodecanoate, 1,1-bis(tert-butyl peroxy)cyclohexane, 2,2-bis(4,4-di-tert-butyl peroxycyclohexyl) propane, 1,1-bis(tert-butyl peroxy)cyclododecane, tert-hexyl peroxyisopropylmonocarbonate, tert-butyl peroxy-3,5,5-trimethylhexanoate, tert-butyl peroxylaurate, 2,5 dimethyl-2,5-di(benzoylperoxy)hexane, tert-butyl peroxyacetate, 2,2-bis(tert-butyl peroxy)butene, tert-butyl peroxybenzoate, butyl-4,4-bis(tert-butylperoxy)valerate, di-tert-butyl peroxyisophthalate, dicumyl peroxide, α-α'-bis(tert-butyl peroxy-m-isopropyl)benzene, 2,5-dimethyl-2,5-di(tert-butyl peroxy)hexane, 1,3-bis(tert-butyl peroxylisopropyl)benzene, tert-butyl cumylperoxide, di-tert-butyl peroxide, p-menthane hydroperoxide and 2,5-dimethyl-2,5-di(tert-butyl peroxy) hexyne-3. When the organic peroxide compound having a decomposition temperature of 110 to 160°C is used, it tends to increase the amount of the graft polymerization of the α,β-unsaturated carboxylic acid compound.

Among them, the dialkylperoxide compounds, diacylperoxide compounds, percarbonate compounds and alkyl perester compounds are preferred.

The added amount of the organic peroxide compound is usually 0.1 to 10 parts by weight, preferably 0.2 to 5 parts by weight based on 100 parts by weight of Polymer (A-1).

The structural units derived from the α,β-unsaturated carboxylic acid compound contained in Polymer (A-2) obtained can be in the form wherein acid anhydride structure (-CO-O-CO-) is ring-opened, or in the form wherein acid anhydride structure (-CO-O-CO-) is retained, or can include both some in retained form and some in ring-opened form.

The weight-average molecular weight of Polymer (A-2) is usually 30,000 to 200,000, preferably 40,000 to 150,000. If the weight-average molecular weight is 30,000 or more, suitable adhesive strength of the composition obtained can be maintained, and if it is 200,000 or lower, the viscosity of the polymer obtained is not too high and handling thereof tends to be easier.

The melt flow rate (MFR) value for Polymer (A-2), in compliance with JIS K 7210, measured using a melt indexer (L217-E14011, manufactured by Techno Seven Co., Ltd.) under conditions of 130°C and 2.16 kgf, is usually 0.1 to 100, preferably 0.5 to 80, and more preferably 1 to 50.

### <Polymer (B-1)>

Polymer (B-1) is a polymer having structural units derived from ethylene and structural units derived from propylene, wherein the content of the structural units derived from ethylene is 5 to 20 mol% based on all structural units of Polymer (B-1), the content of the structural units derived from propylene is 80 to 95 mol% based on all structural units of Polymer (B-1), and the melting peak of which is observed.

The content of the structural units derived from ethylene is preferably 5 to 19 mol%, more preferably 10 to 19 mol%, still more preferably 11 to 18 mol% and particularly preferably 11 to 17 mol% based on all structural units of Polymer (B-1).

The content of the structural units derived from propylene is preferably 81 to 95 mol%, more preferably 81 to 90 mol%, still more preferably 82 to 89 mol% and particularly preferably 84 to 89 mol% based on all structural units of Polymer (B-1).

Polymer (B-1) is a polymer of which melting peak is observed by differential scanning calorimetry (DSC).

In the present description, "melting peak is substantially observed" means that within the range of temperature from -100°C to 200°C, crystalline melting peak that has a heat quantity of crystal melting of 1 J/g or more is observed.

Polymer (B-1) is preferably a polymer in which within the range of temperature from -100°C to 200°C, crystalline melting peak that has a heat quantity of crystal melting of 1 J/g or more or crystallization peak that has a heat quantity of crystallization of 1 J/g or more is observed.

The molecular weight distribution (M_{w}/Mₙ) of Polymer (B-1) is preferably 1 to 4, and more preferably 1 to 3 from the viewpoint of reducing the stickiness of the composition of the present invention. The molecular weight distribution is measured with gel permeation chromatography (GPC).

In addition to the structural unit derived from ethylene and the structural unit derived from propylene, Polymer (B-1) may contain the other structural unit that is different from them.

Examples of the other structural unit include structural units derived from a C₃-C₂₀ straight-chain α-olefin (excluding propylene), a cyclic olefin, a vinyl aromatic compound, and a polyene compound. Specifically the structural units described in JP 2008-63557-A are noted.

Polymer (B-1) can be produced by the same method as that of Polymer (A-1).

### <Polymer (B-2)>

Polymer (B-2) is a polymer which can be obtained by graft polymerization of the Polymer (B-1) with an α,β-unsaturated carboxylic acid compound. Polymer (B-2) is a polymer of which melting peak is observed by differential scanning calorimetry (DSC).

The amount of the graft polymerization with the α,β-unsaturated carboxylic acid compound is usually 0.1 to 10 wt%, preferably 0.2 to 5 wt%, and more preferably 0.2 to 4 wt% based on 100 wt% for Polymer (B-2) obtained.

When the amount of the graft polymerization with the α,β-unsaturated carboxylic acid compound is 0.1 wt% or more, Polymer (B-2) obtained is easy to handle, and when it is 10 wt% or less, the adhesive strength of the composition obtained tends to be increased.

Examples of the α,β-unsaturated carboxylic acid compound include the same compounds noted in Polymer (A-2), preferably the α,β-unsaturated carboxylic acid anhydride, and more preferably maleic anhydride.

Polymer (B-2) can be produced by the same method as that of Polymer (A-2) except that Polymer (B-1) is used instead of Polymer (A-1).

The weight-average molecular weight of Polymer (B-2) is usually 10,000 to 150,000, preferably 15,000 to 100,000. If the weight-average molecular weight is 10,000 or more, suitable adhesive strength of the composition obtained can be maintained, and if it is 150,000 or lower, the viscosity of the polymer obtained will not be too high and handling thereof tends to be easier.

### <Polymer (C-1)>

Polymer (C-1) is a polymer having structural units derived from propylene and structural units derived from 1-butene, wherein the content of the structural units derived from propylene is 60 to 90 mol% based on all structural units of Polymer (C-1), the content of the structural units derived from 1-butene is 10 to 40 mol% based on all structural units of Polymer (C-1), and the melting peak of which is observed.

In addition to the structural unit derived from propylene and the structural unit derived from 1-butene, Polymer (C-1) may contain the other structural unit that is different from them.

Examples of the other structural unit include structural units derived from a C₃-C₂₀ straight-chain α-olefin (excluding propylene and 1-butene), a cyclic olefin, a vinyl aromatic compound, and a polyene compound. Specifically the structural units described in JP 2008-63557-A are noted.

Polymer (C-1) can be produced by the same method as that of Polymer (A-1).

### <Polymer (C-2)>

Polymer (C-2) is a polymer which can be obtained by graft polymerization of the Polymer (C-1) with an α,β-unsaturated carboxylic acid compound.

Polymer (C-2) is a polymer of which melting peak is observed.

The amount of the graft polymerization with the α,β-unsaturated carboxylic acid compound is usually 0.1 to 10 wt%, preferably 0.2 to 5 wt%, and more preferably 0.2 to 4 wt% based on 100 wt% for Polymer (C-2) obtained.

When the amount of the graft polymerization with the α,β-unsaturated carboxylic acid compound is 0.1 wt% or more, the polymer obtained is easy to handle, and when it is 10 wt% or less, the adhesive strength of the composition obtained tends to be increased.

Examples of the α,β-unsaturated carboxylic acid compound include the same compounds noted in Polymer (A-2), preferably the α,β-unsaturated carboxylic acid anhydride, and more preferably maleic anhydride.

Polymer (C-2) can be produced by the same method as that of Polymer (A-2) except that Polymer (C-1) is used instead of Polymer (A-1).

The composition of the present invention can be produced by mixing together Polymer (A), Polymer (B) and Polymer (C) in arbitrary proportions.

Based on 100 parts by weight of the composition, preferably contained are 10 to 90 parts by weight of Polymer (A), 1 to 50 parts by weight of Polymer (B) and 1 to 89 parts by weight of Polymer (C), more preferably contained are 20 to 80 parts by weight of Polymer (A), 3 to 40 parts by weight of Polymer (B) and 10 to 77 parts by weight of Polymer (C), and still more preferably contained are 25 to 70 parts by weight of Polymer (A), 5 to 35 parts by weight of Polymer (B) and 15 to 70 parts by weight of Polymer (C).

A first method for producing the composition of the present invention is a method of mixing together Polymer (A-1), Polymer (B-1) and Polymer (C-1), and graft polymerizing with an α,β-unsaturated carboxylic acid compound.

A second method for producing the composition of the present invention is a method of mixing together Polymer (A-1) and Polymer (B-1), graft polymerizing with an α,β-unsaturated carboxylic acid compound, and further mixing Polymer (C-1) or Polymer (C-2).

A third method for producing the composition of the present invention is a method of mixing together Polymer (A-1) and Polymer (C-1), graft polymerizing with an α,β-unsaturated carboxylic acid compound, and further mixing Polymer (B-1) or Polymer (B-2).

A forth method for producing the composition of the present invention is a method of mixing together Polymer (B-1) and Polymer (C-1), graft polymerizing with an α,β-unsaturated carboxylic acid compound, and further mixing Polymer (A-1) or Polymer (A-2).

A fifth method for producing the composition of the present invention is a method of mixing together Polymer (A-1) or Polymer (A-2), Polymer (B-1) or Polymer (B-2) and Polymer (C-1) or Polymer (C-2).

The graft polymerization is preferably conducted in the presence of a radical initiator.

The composition of the present invention can be used for bonding adhesives, adhesives, adhesive modifiers, heat-sealants, coatings, coating primers, films, sheets, structural materials, building materials, automobile components, electrical/electronic components and packaging materials and the like. Among them, from the superior adhesiveness, the composition is suitable for use for bonding adhesives, adhesives, adhesive modifiers, heat-sealants, coatings, coating primers and the like.

The composition of the present invention can also contain stabilizers such as a phenolic stabilizer, a phosphate stabilizer, an amine stabilizer, an amide stabilizer, an age resister, a weathering stabilizer, an antisettling agent, an antioxidant, a thermal stabilizers and light stabilizer; additives such as a thixotropic agent, a viscosity improver, a defoaming agent, a surface adjustment agent, a weathering resister, a pigment, a pigment dispersant, an antistatic agent, a lubricant, a nucleus agent, a flame retardant, an oil agent and a dyestuff; pigments such as transition metal compounds including titanias (rutile type) and zinc oxide and carbon black; inorganic or organic fillers such as a glass fiber, a carbon fiber, a titanic acid potassium fiber, a wollastonite, calcium carbonate, calcium sulfate, talc, glass flake, barium sulfate, clay pigeon, china clay, minute powdery silica, mica, calcium silicate, aluminium hydroxide, magnesium hydroxide, aluminum oxide, magnesium oxide, alumina and cerite as long as it does not adversely affect the adhesiveness.

The composition of the present invention may contains an organic solvent such as an aromatic hydrocarbon solvent including toluene and xylene; an aliphatic hydrocarbon solvent including hexane; an ester including ethyl acetate and butyl acetate; a ketone including methyl ethyl ketone and methyl isobutyl ketone; and an alcohol including methanol, isopropyl alcohol, ethylene glycol and propylene glycol. The content of the solvent in the composition of the present invention is usually 1 to 30 parts by weight, and preferably 1.5 to 20 parts by weight based on 1 part by weight of the total of Polymer (A), Polymer (B) and Polymer (C). When the composition of the present invention contains the solvent, Polymer (A), Polymer (B), Polymer (C), stabilizers, additives, pigments, fillers and the like may be dissolved or dispersed in the solvent.

The composition of the present invention may contain water and an emulsifier. When the composition of the present invention contains an emulsifier, the content of the emulsifier is usually 1 to 30 parts by weight, and preferably 1 to 25 parts by weight based on 100 parts by weight for the total of Polymer (A), Polymer (B) and Polymer (C). When the content of the emulsifier is 1 part by weight or more, the dispersion state of the composition obtained is good, and when the content of the emulsifier is 30 parts by weight or less, the adhesive strength of the composition obtained can be increased. When the composition of the present invention contains water, the content of the water is usually 60 to 900 parts by weight, and preferably 100 to 900 parts by weight based on 100 parts by weight for the total of Polymer (A), Polymer (B) and Polymer (C). When the content of the water is 60 parts by weight or more, the stability of the composition obtained is good, when the content of the water is 900 parts by weight or less, the composition is able to prevent beading up on the adherend such as polypropylene as mentioned below.

Examples of the emulsifiers include a nonionic emulsifier, an anionic emulsifier, a cationic emulsifier and an amphoteric emulsifier.

Examples of methods for producing the composition containing water and an emulsifier include, a method of melt-kneading Polymer (A), Polymer (B), Polymer (C), water and an emulsifier; a method that involves a heating in which Polymer (A), Polymer (B) and Polymer (C) are heated, and a mixing step in which an emulsifier is mixed into the heated Polymer (A), Polymer (B) and Polymer (C) obtained in the previous step; a method that involves a step in which Polymer (A), Polymer (B), Polymer (C) and an emulsifier are heated and melt-kneaded, and a step in which the kneaded mixture obtained in the previous step is dispersed into water; and a method that involves a dissolving step in which Polymer (A), Polymer (B) and Polymer (C) are dissolved in an organic solvent such as toluene, a mixing step in which an emulsifier is mixed into the solution obtained in the previous dissolving step, and a removal step in which the organic solvent is removed from the mixture obtained in the previous mixing step.

Examples of adherend on which the composition of the present invention is adherend include wooden materials such as wood, plywood, medium-density fiberboard (MDF), particleboard and fiberboard; cellulose materials such as cotton cloth, linen cloth and rayon; plastic materials such as polyolefin such as polyethylene (polyolefin wherein the predominant ingredient is structural units derived from ethylene), polypropylene (polyolefin wherein the predominant ingredient is structural units derived from propylene) and polystyrene (polyolefin wherein the predominant ingredient is structural units derived from styrene), polycarbonates, acrylonitrile/butadiene/styrene copolymers (ABS resins), (meth)acrylic resin polyesters, polyethers, poly(vinyl chloride)s, polyurethanes and urethane foams; ceramic materials such as glass and ceramic; and metallic materials such as iron, stainless steel, copper and aluminum.

The adherend can also be a composite material made of a plurality of materials. Additionally, the adherend can also be a mix-kneaded product of an inorganic filler such as talc, silica and activated charcoal and a carbon fiber, and a plastic material.

A polyurethane is a polymer cross-linked through urethane bonds, usually obtained by the reaction of an alcohol (a compound having -OH) with an isocyanate (a compound having -NCO). An urethane foam is a polyurethan which is foamed with a carbon dioxide generated by the reaction of isocyanate and water used as a cross-linking agent, or a volatile solvent such as Freon. A semi-hardened polyurethane is usually used for interior upholsteries in automobiles, and a hardened polyurethane is usually used in coatings.

The adherend made of at least one material selected from the group consisting of wooden materials, cellulose materials, plastic materials, ceramic materials and metallic materials is preferable. Among them, polypropylene, polystyrene, polycarbonate, acrylonitrile/butadiene/styrene copolymer (ABS resin), polyethylene terephthalate, polyvinyl chloride, (meth)acrylic resin, glass, aluminum and polyurethane are preferable, and polyurethane, polyvinyl chloride, glass, aluminum and polyurethane are more preferable.

The laminate of the present invention involves the abovementioned adherend and an adhesive layer derived from the composition of the present invention.

Examples of methods for manufacturing the laminate of the present invention include a method of lamination by co-extrusion molding of the composition of the present invention and the adherend in sheet form; a method wherein the composition of the present invention in sheet form and a second adherend are sequentially laminated onto a first adherend followed by hot-pressing; and a method comprising coating the composition of the present invention onto the adherend followed by drying. The method comprising coating the composition of the present invention onto the adherend followed by drying usually involves a first step in which the composition of the present invention is applied onto the adherend to obtain a laminate comprising the adherend and a layer containing the composition, and a second step in which the laminate obtained in the first step is dried to obtain a laminate comprising the adherend and a layer derived from the composition.

### Examples

The present invention is described in more detail as shown in the examples below, but the present invention is not limited thereby. In the examples, "parts" and "%" mean based on weight unless stated specifically otherwise.

In the examples below, the physical measurements were carried out by the methods given below.

### (1) Content ratio of structural units in polymers

### (1-1) Content ratio of structural units in polymers

Those were calculated on the basis of the measurement results of the ¹³C-NMR spectra measured using a Bruker AC-250 magnetic resonance spectrometer under the following conditions.
¹³C-NMR (H-decoupling)
¹³C frequency: 150.9 MHz
Pulse width: 6.00 µs
Pulse repeat time: 4.0 s
No. of scans: 256
Measurement temperature: 137°C
Solvent: o-dichlorobenzene-d₄ (conc: about 20%) (A-1-1) and (C-1-1)

The composition ratio of the structural units derived from propylene and the structural units derived from 1-butene was calculated from the ratio of the spectral intensity of the methyl carbon in the structural units derived from propylene and the spectral intensity of the methyl carbon in the structural units derived from 1-butene.

### (B-1-1)

The content of ethylene in the polymer components is obtained according to the method described in the report of Kakugo et al., (Macromolecules, 1982, vol. 15, p 1150-1152).

### (2) Limiting viscosity [η]

Those were measured at 135°C using an Ubbelohde viscometer. Tetralin solutions of the polymer were prepared at concentrations c of the polymer per unit volume of tetralin of 0.6, 1.0, and 1.5 mg/ml, and the limiting viscosity was measured at 135°C. Measurements were repeated three times for each concentration. The average of the three values obtained were set as the specific viscosity (ηₛₚ) values of the concentration, and ηₛₚ/c was extrapolated to c = 0 to determine the limiting viscosity [η].

### (3) Molecular weight distribution

The measurements were carried out with gel permeation chromatograph (GPC) method under the conditions below.
Instrument: Tosoh HLC-8121 GPC/HT
Column: Tosoh TSK gel GMH_{HR}-H(S) HT, 4-column
Temperature: 145°C
Solvent: o-dichlorobenzene
Eluent flow rate: 1.0 ml/min
Sample concentration: 1 mg/ml
Injection volume for measurement: 300 µl
Molecular weight standard substances: polystyrene standards
Detector: differential refractive index detector

### (4) Crystalline melting peak and crystallization peak

Those were measured using a differential scanning calorimeter (Seiko Instruments DSC220C: input compensation DSC) under the following conditions.
(i) about five(5) mg of a sample was heated at a rate of rising temperature of 30°C/min from room temperature to 200°C, and was held for 5 minutes at 200°C after the heating was completed.
(ii) The sample obtained in (i) was cooled at a rate of lowing temperature of 10°C/min from 200°C to -100°C, and was held for 5 minutes at -100°C after the cooling was completed. The peak observed in (ii) was a crystallization peak, which was confirmed whether there was a crystallization peak in which the peak area was 1 J/g or more.
(iii) The sample obtained in (ii) was heated at a rate of rising temperature of 10°C/min from -100°C to 200°C. The peak observed in (iii) was a crystalline melting peak, which was confirmed whether there was a crystalline melting peak in which the peak area was 1 J/g or more.

### (5) Melt flow rate (MFR)

The measurement was carried out according to JIS K 7210 under the conditions of a load of 2.16 kgf and a temperature of 130°C.

### (6) Amount of graft polymerization

The amount of graft polymerization with maleic anhydride was obtained as follows.
(i) One point zero (1.0) g of a sample was dissolved in 20 mL of xylene to prepare a test solution.
(ii) The prepared test solution was dropped into 300 mL of methanol while stirring.
(iii) The sample precipitated in methanol was recovered, and the recovered sample was dried in vacuo at 80°C for 8 hours.
(iv) A film of 100 µm thickness was prepared by hot pressing the dried sample.
(v) The infrared absorption spectrum of the obtained film was measured to quantify the amount of graft polymerization with maleic anhydride depending on the absorption in the vicinity of 1780 cm⁻¹.

### <Example of preparation of Polymer (A-1-1)>

Propylene and 1-butne were copolymerized continuously by using a 100 liters SUS polymerization vessel with stirring blades as follows.

Into the polymerization vessel from the bottom thereof, were continuously performed feeds of 46.3 liter/hour of hexane, 12.96 Kg/hour of propylene and 1.05 Kg/hour of 1-butene. Into the polymerization vessel from the bottom thereof, were continuously performed feeds of 0.0181 g/hour of dimethylsilyl(tetramethylcyclopentadienenyl)(3-tert-butyl-5-methyl-2-phenoxy)titanium dichloride, 0.1670 g/hour of N,N-dimethylaniliumtetrakis(pentafluorophenyl)borate and 2.4713 g/hour of triisobutylaluminum. From the top of the polymerization vessel, extracted was the polymerization liquid continuously so that the amount of polymerization liquid in the polymerization vessel remained 100 liters. The molecular weight regulation was adjusted by using hydrogen. The copolymerization reaction was subjected while the temperature of the polymerization liquid was controlled at 57°C by rotating cooling water in the jacket equipped outside of the polymerization vessel. A small amount of ethanol was added to the polymerization liquid extracted from the polymerization vessel to arrest the polymerization reaction. After the removal of monomers and washing with water, the solvent was removed by steam in the excess amount of water to isolate the copolymer. The isolated copolymer was dried under reduced pressure at 80°C in night and day. By the abovementioned operation, propylene/1-butane copolymer wherein the content of propylene was 96 mol% was given at a rate of 3.57 Kg/hour.

The limiting viscosity [η] of the given copolymer was 2. 0 dl/g, and the molecular weight distribution (M_{w}/Mₙ) thereof was 2.0. Neither crystalline melting peak that has a heat quantity of crystal melting of 1 J/g or more nor crystallization peak that has a heat quantity of crystallization of 1 J/g or more was observed within the range of temperature from -100°C to 200°C. This polymer was set as Polymer (A-1-1).

### <Example of preparation of Polymer (A-2-1)>

A 11 separable flask reactor was equipped with stirrer, thermometer, addition funnel, and reflux condenser, and the gas inside the reactor was replaced with nitrogen. To the reactor, were added 600 parts of xylene, 100 parts of Polymer (A-1-1), and 15 parts of maleic anhydride, and heated to 140°C with stirring to give the solution. Afterwards, 2 parts of di-tert-butylperoxide was added thereto, and the reaction was carried out with continuing to stir at the same temperature for 5 hours. An oil bath was used for the heating. After the reaction was complete, the reaction mixture was cooled down to room temperature, then poured into 1000 parts of acetone. The precipitated white solid was isolated by filtration. The isolated solid was washed with acetone and dried under reduced pressure to give a polymer obtained by graft polymerization of Polymer (A-1-1) with maleic anhydride. The polymer obtained had an M_{w} of 112,285, an Mₙ of 51,240, a molecular weight distribution (M_{w}/Mₙ) of 2.2, an MFR of 4.2 g/10 min, and an amount of graft modification with maleic acid was 0.50%. This polymer was set as Polymer (A-2-1).

### <Example of preparation of Polymer (B-2-1)>

Except for using Polymer (B-1-1) [ethylene/propylene copolymer (Licocene PP 2602, produced by Clariant (Japan) K. K. , ethylene: propylene = 15 mol%: 85 mol%)] instead of Polymer (A-1-1), a polymer obtained by graft polymerization of Polymer (B-1-1) with maleic anhydride was obtained in the same manner as <Example of preparation of Polymer (A-2-1)>. Polymer (B) obtained had an M_{w} of 55, 115, an Mₙ of 25, 386, a molecular weight distribution (M_{w}/Mₙ) of 2.2, and an amount of graft modification with maleic acid was 0.84%. This polymer was set as Polymer (B-2-1).

The crystalline melting peak that has a heat quantity of crystal melting of 1 J/g or more and crystallization peak that has a heat quantity of crystallization of 1 J/g or more were observed in Polymer (B-1-1) within the range of temperature from -100°C to 200°C.

### <Example of preparation of Polymer (C-2-1)>

Except for using Polymer (C-1-1) [propylene/1-butene copolymer, propylene: 1-butene = 74 mol%: 26 mol%, M_{w}=356, 135, Mₙ=174,245, M_{w}/Mₙ=2.0, limiting viscosity [η]=1.5 dl/g, melting point (Tm) = 73°C, glass-transition temperature (Tg) = 24°C, a heat quantity of crystal melting: a heat quantity of crystal melting of 1 J/g or more was observed) instead of Polymer (A-1-1), a polymer obtained by graft polymerization of Polymer (C-1-1) with maleic anhydride was obtained in the same manner as <Example of preparation of Polymer (A-2-1)>. Polymer (C) obtained had an M_{w} of 225,491, an Mₙ of 121,490, a molecular weight distribution (M_{w}/Mₙ) of 1.9, and the amount of graft modification with maleic acid was 0.47%. This polymer was set as Polymer (C-2-1).

### <Example of preparation of a solution containing Polymer (A-1-1)>

Polymer (A-1-1) and methylcyclohexane were mixed so as to give a concentration of Polymer (A-1-1) of 20 wt%. The mixture obtained and 25 parts ethyl acetate based on 100 parts methylcyclohexane were mixed to give a solution containing Polymer (A-1-1).

### <Example of preparation of a solution containing Polymer (A-2-1)>

Except for using Polymer (A-2-1) instead of Polymer (A-1-1), a solution containing Polymer (A-2-1) was obtained in the same manner as <Example of preparation of a solution containing Polymer (A-1-1)>.

### <Example of preparation of a solution containing Polymer (B-1-1)>

Except for using Polymer (B-1-1) instead of Polymer (A-1-1), a solution containing Polymer (B-1-1) was obtained in the same manner as <Example of preparation of a solution containing Polymer (A-1-1)>.

### <Example of preparation of a solution containing Polymer (B-2-1)>

Except for using Polymer (B-2-1) instead of Polymer (A-1-1), a solution containing Polymer (B-2-1) was obtained in the same manner as <Example of preparation of a solution containing Polymer (A-1-1)>.

### <Example of preparation of a solution containing Polymer (C-1-1)>

Except for using Polymer (C-1-1) instead of Polymer (A-1-1), a solution containing Polymer (C-1-1) was obtained in the same manner as <Example of preparation of a solution containing Polymer (A-1-1)>.

### <Example of preparation of a solution containing Polymer (C-2-1)>

Except for using Polymer (C-2-1) instead of Polymer (A-1-1), a solution containing Polymer (C-2-1) was obtained in the same manner as <Example of preparation of a solution containing Polymer (A-1-1)>.

### <Example of preparation of an aqueous dispersion 1>

To a 21 separable flask reactor equipped with stirrer, thermometer, and reflux condenser, were added 200 parts of toluene, 40 parts of Polymer (A-2-1), 50 parts of Polymer (B-2-1) and Polymer (C-2-1), and stirred at 80°C to give a solution. Next, a mixture of 17 parts of LATEMUL E-1000A (produced by Kao Corp.), 5 parts of Noigen EA-177 (produced by Daiichi Kogyo Seiyaku Co. , Ltd.), and 5 parts of isopropanol were added dropwise thereto over 10 minutes. The obtained mixture was stirred for an additional 5 minutes, 5 parts of dimethylethanolamine was added thereto, and stirred for another 5 minutes.

Then, substituting a TK RoboMix® (manufactured by Primix Corp.) for the stirrer, and while the mixture obtained was being stirred with a disperser paddle, a mixture of 100 parts of isopropanol and 100 parts of ion-exchanged water was added dropwise thereto over 30 minutes. Further 300 parts of ion-exchanged water was added dropwise thereto.

The milky white dispersion obtained is introduced into a 2L eggplant flask, evaporated out at reduced pressure in an evaporator, and filtered through a 200 mesh nylon netting to give an aqueous dispersion containing Polymer (A-2-1), Polymer (B-2-1), Polymer (C-2-1) and an emulsifier.

### <Example of preparation of an aqueous dispersion 2>

Except for using a mixture of 10 parts of Jeffamine M-1000 (produced by Mitsui Fine Chemicals) and 5 parts of isopropanol as the emulsifier solution, an aqueous dispersion is obtained in the same manner as <Example of preparation of an aqueous dispersion 1>.

### <Example 1>

The solution containing Polymer (A-2-1), the solution containing Polymer (B-2-1) and the solution containing Polymer (C-2-1) were mixed in a way that a ratio of weight of Polymer (A-2-1), Polymer (B-2-1) and Polymer (C-2-1) was 37.5:25:37.5. The mixture obtained was stirred with a three-one motor for 5 minutes for give a composition containing Polymer (A-2-1), Polymer (B-2-1) and Polymer (C-2-1). The composition did not undergo phase separation visible to the naked eye and was a homogenous solution.

### <Example 2>

Except for changing a ratio of weight of Polymer (A-2-1), Polymer (B-2-1) and Polymer (C-2-1) to 60:15:25, a composition containing Polymer (A-2-1), Polymer (B-2-1) and Polymer (C-2-1) was obtained in the same manner as <Example 1>. The composition did not undergo phase separation visible to the naked eye and was a homogenous solution.

### <Example 3>

Except for changing a ratio of weight of Polymer (A-2-1), Polymer (B-2-1) and Polymer (C-2-1) to 44.5:11:44.5, a composition containing Polymer (A-2-1), Polymer (B-2-1) and Polymer (C-2-1) was obtained in the same manner as <Example 1>. The composition did not undergo phase separation visible to the naked eye and was a homogenous solution.

### <Comparative Example 1>

The solution containing Polymer (A-2-1) was taken as a composition.

### <Comparative Example 2>

The solution containing Polymer (B-2-1) was taken as a composition.

### <Comparative Example 3>

The solution containing Polymer (C-2-1) was taken as a composition.

### <Test Example 1>

The compositions respectively obtained in Examples and Comparative Examples were applied onto an adherend consisting of a polypropylene plate (3 mm thick) by an applicator in a way that a film thickness after drying became 10 µm. After drying for 5 minutes at 50 °C in a hot air drier, an adhesion layer was formed to give a laminate including an adherend and an adhesion layer. After drying, a 2-component urethane paint was applied on the adhesion layer of the laminate by a spray in a way that a film thickness became 100 µm. After the application and maturing for 10 minutes or more at room temperature, a heating treatment was carried out at a predetermined temperature for 30 minutes to obtain a sample.

After the heating treatment and maturing for 3 days or more, the coated film was cut off at 1 cm intervals, and the peel strength of the film was measured using a tensile test apparatus (autograph, manufactured by Shimadzu) with a peel rate of 50 mm/min and a peel angle of 180 degrees at 50°C. Table 1 shows the results.

**[Table 1]**

| | Composition | Peel strength (N/cm) |
|---|---|---|
| Example 1 | A-2-1/B-2-1/C-2-1=37.5/25/37.5 | 6.7 |
| Example 2 | A-2-1/B-2-1/C-2-1=60/15/25 | 6.1 |
| Example 3 | A-2-1/B-2-1/C-2-1=44.5/11/44.5 | 9.0 |
| Comp. Ex. 1 | A-2-1 | 3.9 |
| Comp. Ex. 2 | B-2-1 | 0.4 |
| Comp. Ex. 3 | C-2-1 | 5.4 |

The compositions of Examples were found to be excellent in peel strength and excellent in adhesiveness toward polypropylene.

### [Industrial Applicability]

The composition of the present invention is excellent in adhesiveness toward polypropylene.

## Claims

1. A composition comprising the following (A), (B) and (C):
(A): Polymer (A-1) that is a polymer having structural units derived from propylene and structural units derived from 1-butene, wherein the content of the structural units derived from propylene is 70 to 99 mol% based on all structural units of Polymer (A-1), the content of the structural units derived from 1-butene is 1 to 30 mol% based on all structural units of Polymer (A-1), and substantially no melting peak is observed with Polymer (A-1), or,
Polymer (A-2) obtained by graft polymerization of Polymer (A-1) with an α,β-unsaturated carboxylic acid compound,
(B): Polymer (B-1) that is a polymer having structural units derived from ethylene and structural units derived from propylene, wherein the content of the structural units derived from ethylene is 5 to 20 mol% based on all structural units of Polymer (B-1), the content of the structural units derived from propylene is 80 to 95 mol% based on all structural units of Polymer (B-1), and the melting peak of which is observed, or,
Polymer (B-2) obtained by graft polymerization of Polymer (B-1) with an α,β-unsaturated carboxylic acid compound, and
(C) : Polymer (C-1) that is a polymer having structural units derived from propylene and structural units derived from 1-butene, wherein the content of the structural units derived from propylene is 60 to 90 mol% based on all structural units of Polymer (C-1), the content of the structural units derived from 1-butene is 10 to 40 mol% based on all structural units of Polymer (C-1), and a melting peak is observed with Polymer (C-1), or,
Polymer (C-2) obtained by graft polymerization of Polymer (C-1) with an α,β-unsaturated carboxylic acid compound.

2. The composition according to Claim 1 wherein the composition comprises 10 to 90 parts by weight of (A), 1 to 50 parts by weight of (B) and 1 to 89 parts by weight of (C) with respect to 100 parts by weight of the composition.

3. The composition according to Claim 1 or Claim 2 wherein the limiting viscosity of Polymer (A-1) is 0.1 to 10 dl/g.

4. The composition according to any one of Claims 1 to 3, further comprising an organic solvent.

5. The composition according to any one of Claims 1 to 3, further comprising water and an emulsifier.

6. A laminate comprising;
an adhesive layer derived from the composition according to any one of Claims 1 to 5 and
an adherend.

7. The laminate according to Claim 6, wherein the adherend is an adherend which is made of a plastic material.

8. The laminate according to Claim 7, wherein the plastic material is polyolefin.

9. A method for manufacturing a laminate comprising;
a first step in which the composition according to any one of Claims 1 to 5 is applied onto an adherend to give a laminate comprising the adherend and a layer containing the composition, and,
a second step in which the laminate obtained in the first step is dried to give a laminate comprising the adherend and a layer derived from the composition.
